# EUROPÄISCHE PATENTANMELDUNG

(11) **EP 4 779 824 A1**
(43) Veröffentlichungstag der Anmeldung: **22.07.2026**
(21) Anmeldenummer: 25226147.4
(22) Anmeldetag: 22.12.2025
(51) Int. Cl.: H02G 15/013, H02G 15/113, H02G 15/117

(54) **KABELMUFFE**

(30) Priorität: 15.01.2025 DE 202025100170 U
(71) Anmelder: "HÖHNE" GmbH Fabrik für elektrochemische Islorierungen, 24568 Kaltenkirchen (DE)
(72) Erfinder: Thomsen, Katrin, 25563 Wrist (DE)
(74) Vertreter: Hauck Patent- und Rechtsanwälte PartmbB

(57) **Zusammenfassung**

Kabelmuffe zum Umhüllen einer Verbindung zwischen mindestens zwei Erdkabeln, insbesondere einer seriellen Verbindung zweier Erdkabel oder einer Verbindung zwischen einem Hauptkabel und einem Abzweigkabel, umfassend
• ein Muffengehäuse,
• Durchgangsöffnungen für Erdkabel an beiden Enden des Muffengehäuses,
• nach außen gerichtete, hohle Ausbuchtungen in zwei einander gegenüberliegenden Seitenwänden des Muffengehäuses und
• mindestens eine Einfüllöffnung für eine aushärtbare Gießmasse an der Oberseite des Muffengehäuses,
• wobei das Muffengehäuse in Längsrichtung durch die beiden endseitigen Durchgangsöffnungen hindurch in zwei Gehäuseteile geteilt ist, sodass die beiden Gehäuseteile um ein durch die endseitigen Durchgangsöffnungen hindurch verlaufendes Erdkabel herum zusammenfügbar sind,
• einen Einlegesteg, der mit seinen beiden Enden in die Ausbuchtungen einsetzbar ist, um den Einlegesteg neben mindestens einem durch die beiden endseitigen Durchgangsöffnungen hindurch verlaufenden Erdkabel im Muffengehäuse zu halten, und
• mindestens eine Einrichtung zum Fixieren des mindestens einen Erdkabels am Einlegesteg.

## Beschreibung

Die Erfindung betrifft eine Kabelmuffe zum Umhüllen einer Verbindung zwischen mindestens zwei Erdkabeln.

Kabelmuffen werden insbesondere im Bereich der Stromversorgung eingesetzt, um einen oder mehrere Verbraucher mit einem Energieversorger zu verbinden. Kabelmuffen, die für die Verlängerung von Erdkabeln verwendet werden, werden auch als "Verbindungsmuffen" bezeichnet. Als "Kabelabzweigmuffen" werden Kabelmuffen bezeichnet, die ein Hauptkabel (auch "Durchgangskabel" genannt) mit einem Abzweigkabel zu einem Hausanschluss, einer Ladestation für Elektromobile oder einem anderen Verbraucher verbinden.

Im Allgemeinen weisen Kabelmuffen ein Muffengehäuse mit Durchgangsöffnungen für Erdkabel an den beiden Enden auf. Das Muffengehäuse ist in Längsrichtung durch die beiden endseitigen Durchgangsöffnungen hindurch in zwei Gehäuseteile geteilt. Das Muffengehäuse weist an der Oberseite mindestens eine Einfüllöffnung für ein aushärtbares Gießharz oder eine andere Gießmasse auf. Im Muffengehäuse ist eine geeignete Kabelverbindungstechnik (z.B. Klemmring, Verbinder, Einzelklemmen) angeordnet, welche die beiden Enden von Erdkabeln miteinander oder ein durchgehendes Hauptkabel mit einem Abzweigkabel verbindet. Nach dem Verbinden der Erdkabel miteinander werden die Gehäuseteile des Muffengehäuses um ein durch die beiden Durchgangsöffnungen hindurch verlaufende Erdkabel herum zusammengefügt und das Muffengehäuse durch die Einfüllöffnung hindurch mit Gießmasse gefüllt. Nach dem Aushärten der Gießmasse ist die Verbindung zwischen den Erdkabeln isoliert und abgedichtet.

Durch äußere Krafteinwirkung an der Muffe und/oder Kabelverbindung, z.B. beim Verlegen oder Arbeiten an den Versorgungsleitungen, kann es zu erhöhten Belastungen kommen. Diese können die Verbindung beschädigen und zu unzureichender Isolation führen, durch die ein Kurzschluss möglich ist.

Die DE 199 58 982 C2 beschreibt eine Muffe zum Isolieren und Abdichten einer Verbindung zwischen mindestens zwei Erdkabeln, insbesondere eines Durchgangskabels mit einem Abzweigkabel. Die Muffe weist ein Muffengehäuse aus mindestens zwei zusammenfügbaren Gehäuseteilen mit mindestens einer Einfüllöffnung für eine aushärtbare Gießmasse auf. Zwei Durchgangsöffnungen des Muffengehäuses für Erdkabel sind zwischen zwei Gehäuseteilen angeordnet und weisen Dichtsitze auf, deren Querschnitte die Querschnitte der durchzuführenden Erdkabel geringfügig übersteigen. Dichtelemente aus einem weichen oder weichelastischen Material sind in den Dichtsitzen anzuordnen, um die Spalte zwischen den Dichtsitzen und den Erdkabeln zu schließen und abzudichten, auch wenn der Muffenkörper unter dem Gewicht der Gießmasse die Dichtelemente oberhalb der Erdkabel komprimiert. Die Dichtelemente sind Streifen und/oder Formteile eines Schaumstoffmaterials. Die Streifen weisen auf einer Seite eine Klebstoffschicht aufweist, mit der sie auf einem Erdkabel fixierbar sind. Da die Querschnitte der Dichtsitze die Querschnitte der Erdkabel nur geringfügig übersteigen, sackt das Muffengehäuse beim Eingießen des Gießharzes nur geringfügig ab, bis die Dichtelemente oberhalb des Erdkabels weitgehend komprimiert sind. Hierdurch wird eine unzulässige Annäherung der elektrisch leitenden Elemente an die Innenwand des Muffengehäuses verhindert. Aufgrund der geringen Spalte zwischen Dichtsitz und Erdkabel kann die Muffe nur mit darauf abgestimmten Kabelquerschnitten verwendet werden. Zudem kann sich das Muffengehäuse unter dem Gewicht der Gießmasse zwischen den beiden Dichtsitzen etwas nach unten durchbiegen, sodass die erforderlichen Isolationsstärken nicht gewährleistet sind.

Davon ausgehend liegt der Erfindung die Aufgabe zugrunde, eine Kabelmuffe zu schaffen, die einen größeren Einsatzbereich hinsichtlich der Verwendung bei Erdkabeln mit unterschiedlichen Querschnitten aufweist, eine unzureichende Überdeckung der elektrisch leitenden Elemente im Muffengehäuse mit Gießmasse wirksam verhindert und gegen Beschädigung durch äußere Krafteinwirkung auf Erdkabel besser geschützt ist, sowie dem Monteur hilft Montagefehler zu vermeiden.

Die Aufgabe wird erfindungsgemäß durch eine Kabelmuffe gemäß Anspruch 1 gelöst. Vorteilhafte Ausführungsarten der Kabelmuffe sind in Unteransprüchen und in der Beschreibung angegeben.

Die erfindungsgemäße Kabelmuffe zum Umhüllen einer Verbindung zwischen mindestens zwei Erdkabeln, insbesondere einer seriellen Verbindung zweier Erdkabel oder einer Verbindung zwischen einem Hauptkabel und einen Abzweigkabel, umfasst
- ein Muffengehäuse,
- Durchgangsöffnungen für Erdkabel an beiden Enden des Muffengehäuses,
- nach außen gerichtete, hohle Ausbuchtungen in zwei einander gegenüberliegenden Seitenwänden des Muffengehäuses und
- mindestens eine Einfüllöffnung für eine aushärtbare Gießmasse an der Oberseite des Muffengehäuses,
- wobei das Muffengehäuse in Längsrichtung durch die beiden endseitigen Durchgangsöffnungen hindurch in zwei Gehäuseteile geteilt ist, sodass die beiden Gehäuseteile um ein durch die endseitigen Durchgangsöffnungen hindurch verlaufendes Erdkabel herum zusammenfügbar sind,
- einen Einlegesteg, der mit seinen beiden Enden in die Ausbuchtungen einsetzbar ist, um den Einlegesteg neben mindestens einem durch die beiden endseitigen Durchgangsöffnungen hindurch verlaufenden Erdkabel im Muffengehäuse zu halten und
- mindestens eine Einrichtung zum Fixieren mindestens eines Erdkabels am Einlegesteg.

Dadurch, dass im montierten Zustand der erfindungsgemäßen Kabelmuffe der Einlegesteg an seinen beiden Enden in den Ausbuchtungen des Muffengehäuses eingesetzt ist, wird der Einlegesteg im Muffengehäuse festgehalten. Durch die Einrichtung zum Fixieren wird mindestens ein Erdkabel am Einlegesteg festgehalten. Hierbei kann es sich um ein einziges Erdkabel handeln, das seriell mit einem weiteren Erdkabel verbunden ist. Alternativ handelt es sich hierbei um ein Durchgangskabel und ein von diesem abgezweigtes Abzweigkabel. Die Ausbuchtungen weisen vorzugsweise an der Oberseite jeweils mindestens eine Anlagefläche für die Enden des Trennsteges und neben der Anlagefläche eine nach innen geneigte Anschrägung zum Ableiten von Lufteinschlüssen zur Einfüllöffnung auf. Hierdurch kann sichergestellt werden, dass beim Einfüllen von Gießmasse keine Luftabschlüsse in den Ausbuchtungen verbleiben. Durch das Gewicht der Gießmasse wird das Muffengehäuse nicht bezüglich der Erdkabel nach unten verlagert, weil das Muffengehäuse über die Ausbuchtungen an den beiden Enden des Einlegestegs festgehalten wird. Hierdurch wird verhindert, dass sich das Muffengehäuse an die stromführenden Teile annähert und die Isolierstärke der Gießmasse unzureichend verkleinert wird. Dies ermöglicht den Einsatz von Dichtelementen, die große Spalte zwischen den Erdkabeln und den Durchgangsöffnungen überbrücken können, da sie keinen hohen Belastungen durch das Muffengehäuse aufgrund des Gewichts der eingefüllten Gießmasse ausgesetzt werden. Infolgedessen kann dieselbe Kabelmuffe für verschiedene Erdkabel mit unterschiedlichen Querschnitten verwendet werden. Hierdurch wird der Aufwand für die Bereitstellung von Kabelmuffen für unterschiedliche Einsatzfälle verringert. Zudem ist mindestens ein Erdkabel durch die Einrichtung zum Fixieren am Einlegesteg festgelegt, sodass eine äußere Krafteinwirkung auf das Erdkabel auf das gesamte System verteilt wird und es nicht zu lokalen Krafterhöhungen kommt, die die Gießharzisolation in solcher Weise beschädigen, dass ein Ausfallen der Kabelverbindung, z.B. durch Kurzschluss, zustande kommt. Durch diese Zugentlastung werden auch Beschädigungen des Klemmrings und seiner Verbindung mit dem fixierten Erdkabel vermieden.

Gemäß einer Ausführungsart der Erfindung ist das Muffengehäuse in vertikaler Richtung geteilt. Dies ist vorteilhaft für das Zusammenfügen der Gehäuseteile, da diese von den beiden Seiten der Erdkabel aus in horizontaler Richtung zusammengefügt werden können. Ferner ist die Teilung des Muffengehäuses in vertikaler Richtung von Vorteil für die Herstellung des Muffengehäuses. Die Herstellung erfolgt vorzugsweise durch Spritzgießen aus Kunststoff. Durch die Teilung des Muffengehäuses in vertikaler Richtung können Hinterschnitte im Spritzgießwerkzeug vermieden werden.

Gemäß einer weiteren Ausführungsart ist das Muffengehäuse durch die Einfüllöffnung hindurch geteilt. Auch dies ist vorteilhaft für die Herstellung des Muffengehäuses durch Spritzgießen aus Kunststoff.

Gemäß einer weiteren Ausführungsart umfasst die Einrichtung zum Fixieren der Erdkabel am Einlegesteg mindestens einen Kabelbinder, der ausgebildet ist, um schlaufenförmig um das mindestens eine Erdkabel herumgelegt zu werden und dieses mit dem Einlegesteg zu verspannen. Mittels des Kabelbinders ist das mindestens eine Erdkabel hinreichend fest mit dem Einlegesteg verbindbar, um den Belastungen durch eingefüllte Gießmasse und einer auf das Erdkabel ausgeübten Zugkraft standzuhalten. Die Fixierung mittels Kabelbinder kann einfach hergestellt werden.

Gemäß einer weiteren Ausführungsart ist der Kabelbinder auf beiden Seiten des mindestens einen Erdkabels durch Löcher des Einlegestegs hindurchgeführt. Hierdurch kann ein einzelnes Erdkabel, neben dem der Einlegesteg angeordnet ist, oder können zwei Erdkabel, zwischen denen der Einlegesteg angeordnet ist, am Einlegesteg fixiert werden. Hierdurch kann auch eine seitliche Fixierung des mindestens einen Erdkabels erreicht werden, die eine Verlagerung des mindestens einen Erdkabels in seitlicher Richtung verhindert. Für die Fixierung von zwei Erdkabeln am Einlegesteg kann alternativ der Kabelbinder neben dem Einlegesteg schlaufenförmig um die beiden Erdkabel herumgelegt und zusammengezogen werden, sodass die beiden Erdkabel mit dem Einlegesteg verspannt werden.

Gemäß einer anderen Ausführungsart ist der Kabelbinder ausgebildet, um schlaufenförmig um das mindestens eine Erdkabel und die äußeren Enden des Einlegestegs herumgelegt zu werden. Hierdurch kann ein einzelnes Erdkabel, neben dem der Einlegesteg angeordnet ist, an dem Einlegesteg fixiert werden. Alternativ können hierdurch zwei Erdkabel, zwischen denen der Einlegesteg angeordnet ist, an dem Einlegesteg fixiert werden.

Gemäß einer weiteren Ausführungsart sind die beiden Gehäuseteile ausgebildet, einen um die Enden des Einlegestegs herumgelegten Kabelbinder beim Zusammenfügen der Gehäusehälften gegen die Außenseiten der beiden Enden des Einlegesteges zu pressen. Hierdurch kann die Fixierung des mindestens einen Erdkabels am Einlegesteg nachgespannt werden. Zudem kann hierdurch eine seitliche Fixierung des mindestens einen Erdkabels erreicht werden, die eine Verlagerung des mindestens einen Erdkabels in seitlicher Richtung verhindert.

Gemäß einer weiteren Ausführungsart weist der Einlegesteg auf mindestens einer Seite Einrichtungen zum Führen des Kabelbinders auf. Durch die Einrichtungen zum Führen wird ein Abrutschen des Kabelbinders vom Einlegesteg verhindert und das Anbringen des Kabelbinders vereinfacht.

Gemäß einer anderen Ausführungsart weist die Einrichtung zum Fixieren des mindestens einen Erdkabels am Einlegesteg mindestens eine Kabelschelle auf, die an Schellenfüßen auf einer Seite des Einlegestegs fixierbar ist, um mindestens ein Erdkabel aufzunehmen und auf einer Seite des Einlegestegs zu fixieren. Zum Fixieren zweier Erdkabel umfasst die Einrichtung zum Fixieren zwei Kabelschellen, die an Schellenfüßen auf verschiedenen Seiten des Einlegestegs fixierbar sind, um die beiden Erdkabel aufzunehmen und auf verschiedenen Seiten des Einlegestegs zu fixieren.

Gemäß einer weiteren Ausführungsart weist der Trennsteg an den beiden Enden und weisen die Ausbuchtungen an den Auflageflächen für den Trennsteg zusammenfügbare Profilierungen und/oder miteinander verschnappbare Schnappelemente auf, um den Trennsteg bei der Montage in den Ausbuchtungen festzulegen. Hierdurch kann die Montage vereinfacht werden. Gemäß einer weiteren Ausführungsart sind die Schnappelemente lösbar ausgebildet, um gegebenenfalls bei der Montage eine Korrektur vorzunehmen.

Gemäß einer weiteren Ausführungsart sind die Ausbuchtungen angrenzend an eine Durchgangsöffnung oder an einen an die Durchgangsöffnung angrenzenden Dichtsitz angeordnet. Hierdurch ist die Zugentlastung möglichst weit von der Kabelverbindung entfernt angeordnet, um die auf das mindestens eine fixierte Erdkabel wirkenden Zugbelastungen von der verwendeten Kabelverbindungstechnik möglichst fernzuhalten.

Gemäß einer weiteren Ausführungsart sind die beiden Gehäuseteile um ein erstes Gelenk auf einer Seite des Muffengehäuses mit einer in Längsrichtung des Muffengehäuses verlaufenden Gelenkachse zusammenschwenkbar miteinander verbunden. Durch das erste Gelenk wird die Montage des Muffengehäuses an den Erdkabeln erleichtert.

Gemäß einer weiteren Ausführungsart weist das erste Gelenk Steckzungen und Stecköffnungen auf, die an benachbarten Rändern der beiden Gehäuseteile angeordnet sind, wobei die Steckzungen und Stecköffnungen ausgebildet sind, zusammengesteckt zu werden und die beiden Gehäuseteile um die Gelenkachse schwenkbar miteinander zu verbinden. Mittels der Steckzungen und Stecköffnungen kann das Muffengehäuse am Montageort aus den beiden Gehäuseteilen zusammengesetzt werden, indem diese von verschiedenen Seiten der Erdkabel zusammengesteckt und danach zusammengeschwenkt werden. Hierdurch kann die Montage erleichtert werden.

Gemäß einer weiteren Ausführungsart weist das Muffengehäuse um ein erstes Gelenk an der Unterseite zusammenklappbare Gehäuseteile auf, ist zwischen den Gehäuseteilen die Einfüllöffnung ausgebildet, weist das Muffengehäuse an der Einfüllöffnung mindestens eine Verschlussklappe auf, die über ein zweites Gelenk mit einer in Längsrichtung des Muffengehäuses verlaufenden Gelenkachse mit einem Gehäuseteil verbunden ist und die in einem Abstand vom zweiten Gelenk mindestens einen Schnapphaken aufweist, der mit einer Verriegelungskante an dem anderen Gehäuseteil verschnappbar ist, wenn die beiden Gehäuseteile vollständig zusammengeschwenkt sind. Durch die Verschlussklappe wird das Muffengehäuse in der zusammengeklappten Stellung der Gehäuseteile fixiert und die Einfüllöffnung geschlossen.

Gemäß einer weiteren Ausführungsart weist die Verschlussklappe Schnapphaken auf, die verschiedene Abstände von dem zweiten Gelenk aufweisen, wobei ein näher an dem zweiten Gelenk angeordneter erster Schnapphaken mit einer Verriegelungskante an dem anderen Gehäuseteil verschnappbar ist, wenn die beiden Gehäuseteile vollständig zusammengeschwenkt sind, und ein weiter von dem zweiten Gelenk entfernter zweiter Schnapphaken mit der Verriegelungskante verschnappbar ist, wenn die beiden Gehäuseteile nur teilweise zusammengeschwenkt sind. Diese Ausführungsart ermöglicht ein Anbringen des Muffengehäuses in zwei verschiedenen Schwenkstellungen an den Erdkabeln. Hierdurch kann eine Anpassung insbesondere an verschiedene Kabelverbindungstechniken, z.B. größere Klemmringe, vorgenommen werden, um die erforderliche Überdeckung der Kabel und des Klemmringes mit Gießmasse zu gewährleisten. Zudem kann die Einfüllöffnung nach dem Eingießen von Gießmasse durch Schließen der Verschlussklappe geschlossen werden.

In beiden Schwenkstellungen kann das Muffengehäuse an der Oberseite durch die Verschlussklappe geschlossen werden. In der Schwenkstellung, in der die Gehäuseteile nur teilweise zusammengeschwenkt sind, kann das Muffengehäuse an den Enden mit Dichtelementen versehen werden, welche die Spalte zwischen den beiden Gehäuseteilen schließen.

Gemäß einer weiteren Ausführungsart weist die Abzweigmuffe mindestens zwei nebeneinander angeordnete Verschlussklappen auf. Durch Schließen einer der beiden Verschlussklappen kann die Abzweigmuffe in der zusammengeklappten Lage der beiden Gehäuseteile fixiert werden. Durch die Einfüllöffnung neben der noch geöffneten Verschlussklappe hindurch kann Gießmasse eingefüllt und danach auch diese Verschlussklappe geschlossen werden. Zudem ermöglichen mehrere Einfüllöffnungen das Auffüllen des Muffengehäuses mit Gießmasse in Hanglage, wobei die Gießmasse durch die am höchsten angeordnete Einfüllöffnung eingefüllt und die übrigen Verschlussklappen geschlossen werden.

Gemäß einer weiteren Ausführungsart weist das Muffengehäuse an der Oberseite mindestens einen Einfüllstutzen mit der Einfüllöffnung am oberen Rand auf. Durch den Einfüllstutzen wird das vollständige Befüllen der Kabelmuffe mit Gießmasse erleichtert.

Gemäß einer weiteren Ausführungsart weist das Muffengehäuse angrenzend an die Durchgangsöffnungen jeweils einen Dichtsitz für ein Dichtelement zum Abdichten auf mindestens einem durch die Durchgangsöffnung hindurchgeführten Erdkabel auf.

Gemäß einer weiteren Ausführungsart weist das Muffengehäuse auf mindestens einer Seite in verschiedenen Abständen von einer endseitigen Durchgangsöffnung verschiedene Dichtsitze für ein Dichtelement zum Abdichten auf mindestens einem durch die Durchgangsöffnung hindurch verlaufenden Erdkabel auf, um wahlweise das Erdkabel in verschiedenen Abständen von der Durchgangsöffnung abzudichten. Hierdurch kann eine Einstellung der Kabelmuffe auf verschiedene Kabelquerschnitte und Kabelverbindungstechniken vorgenommen werden, um die erforderliche Überdeckung der stromführenden Teile mit Gießmasse sicherzustellen und die Menge der eingesetzten Gießmasse zu optimieren.

Gemäß einer weiteren Ausführungsart umfasst die Kabelmuffe einen Klemmring, der Klemmeinrichtungen, Einrichtungen zum Verspannen der Klemmeinrichtungen mit zwei Erdkabeln, Kontaktelemente, Einrichtung zum Verspannen der Kontaktelemente mit den Leitern der beiden Erdkabel und elektrische Verbindungseinrichtungen zwischen einander zugeordneten Kontaktelementen für die verschiedenen Erdkabel aufweist und ausgebildet ist, in dem Muffengehäuse um beide Erdkabel herumgelegt zu werden und die miteinander zu verbindenden Leiter der beiden Erdkabel miteinander zu verbinden.

Die Erfindung wird nachfolgend anhand der anliegenden Zeichnungen von Ausführungsbeispielen näher erläutern. In den Zeichnungen zeigen:
- Fig. 1: eine Kabelmuffe in eng geschlossenem Zustand in einer Draufsicht;
- Fig. 2: ein Gehäuseteil derselben Kabelmuffe in einer Ansicht von der Seite;
- Fig. 3: ein weiteres Gehäuseteil derselben Kabelmuffe in einer Ansicht von der Seite;
- Fig. 4: dieselbe Kabelmuffe in einem Vertikalschnitt senkrecht zur Längsrichtung;
- Fig. 5: dieselbe Kabelmuffe in breit geschlossenem Zustand in einer Draufsicht;
- Fig. 6a-c: eine Kabelmuffe mit einer abweichend ausgebildeten Einrichtung zum Fixieren der Erdkabel am Einlegesteg mit einem Kabelbinder in einem Vertikalschnitt senkrecht zur Längsachse;
- Fig. 7: eine Kabelmuffe mit einer Einrichtung zum Fixieren der Erdkabel am Einlegesteg mit zwei Kabelschellen in einem Vertikalschnitt senkrecht zur Längsrichtung.

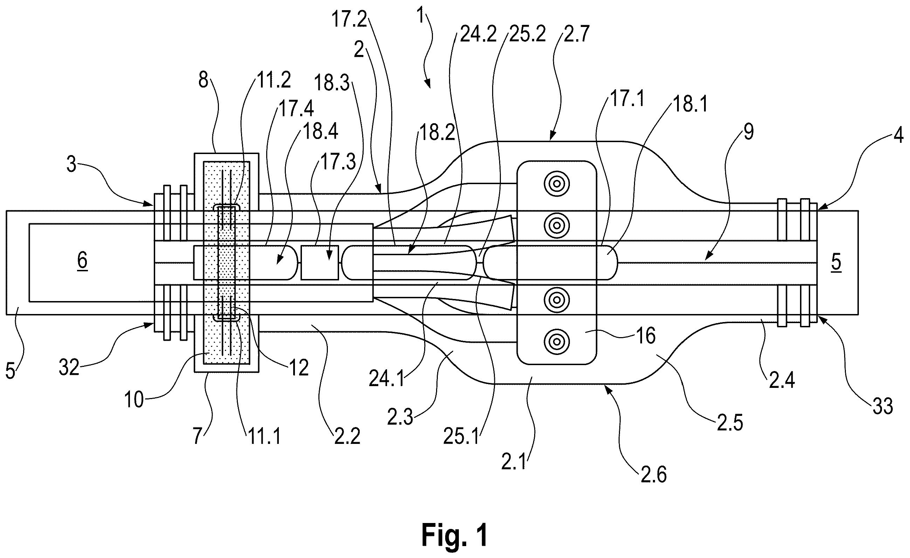

Gemäß Fig. 1 bis 4 weist eine Kabelmuffe 1 ein langgestrecktes, hohles Muffengehäuse 2 auf, das an den beiden Enden Durchgangsöffnungen 3, 4 für Erdkabel 5, 6 aufweist.

Das Muffengehäuse 2 weist im Wesentlichen fünf Abschnitte auf: Im Zentrum hat es einen Hauptabschnitt 2.1 mit im Wesentlichen ovalem Querschnitt mit dem größten Radius im unteren Teil und dem kleinsten Radius im oberen Teil.

Ausgehend von der Durchgangsöffnung 3 weist es einen Muffenhals 2.2 mit ovalem Querschnitt auf. Der Muffenhals 2.2 ist am anderen Ende über einen allmählich sich erweiternden Übergangsbereich 2.3 mit dem Hauptabschnitt 2.1 verbunden.

Ferner weist das Muffengehäuse 2 einen kreiszylindrischen Muffenhals 2.4 auf, der an einem Ende die Durchgangsöffnung 4 aufweist. Am anderen Ende ist der kreiszylindrische Muffenhals 2.4 über einen allmählich sich erweiternden Übergangsbereich 2.5 mit dem Hauptabschnitt 2.1 verbunden.

Der Muffenhals 2.2 mit dem ovalen Querschnitt weist an den beiden Seiten nach außen vorstehende, hohle Ausbuchtungen 7, 8 auf.

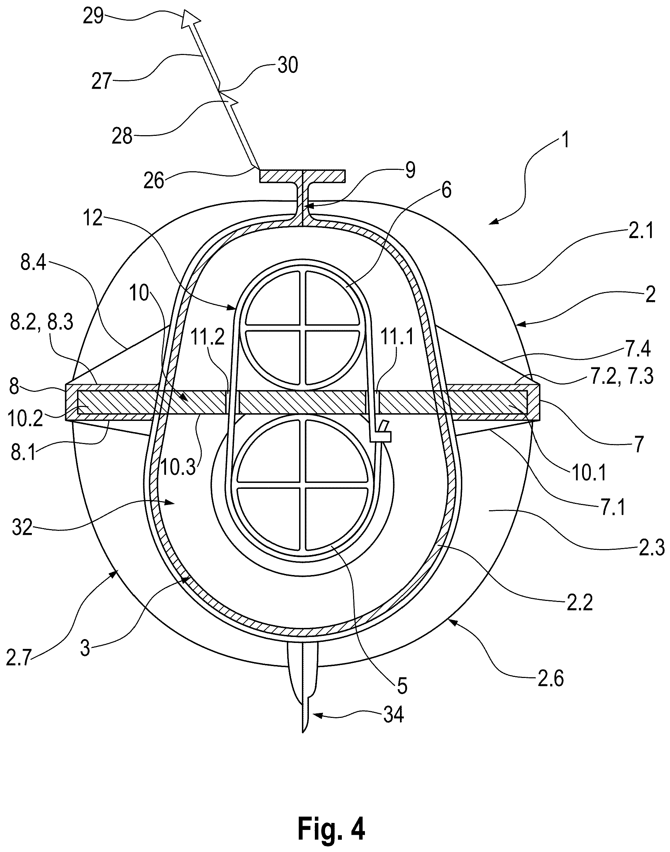

Die Ausbuchtungen 7, 8 haben jeweils eine ebene untere Auflagefläche 7.1, 8.1 und an den beiden seitlichen Rändern ebene obere Anlageflächen 7.2, 7.3, 8.2, 8.3. Zwischen den beiden oberen Anlageflächen 7.2, 7.3, 8.2, 8.3 weist jede Ausbuchtung 7, 8 eine Anschrägung 7.4, 8.4 auf, die nach oben und zur vertikalen Trennebene 9 zwischen zwei zusammenfügbaren Gehäuseteilen 2.6, 2.7 des Muffengehäuses 2 gerichtet ist (vgl. Fig. 4).

Ein Trennsteg 10 ist mit seinen beiden Enden 10.1,10.2 in die Ausbuchtungen 7, 8 einsetzbar, sodass er mit den Unterseiten seiner beiden Enden auf den Auflageflächen 7.1, 8.1 anliegt und mit den Oberseiten seiner beiden Enden an den Anlageflächen 7.2, 7.3, 8.2, 8.3 anliegt.

Der Trennsteg 10 weist in einem mittleren Abschnitt 10.3 zwischen den beiden Enden zwei voneinander beabstandete Löcher 11.1, 11.2 auf. Der Trennsteg 10 ist zwischen einem Hauptkabel 5 und einem Abzweigkabel 6 positionierbar, sodass das Hauptkabel 5 an der Unterseite und das Abzweigkabel 6 an der Oberseite des Trennsteges 10 anliegt. Mittels eines Kabelbinders 12, der schlaufenförmig um das Hauptkabel 5 und das Abzweigkabel 6 herumgelegt und durch die Löcher 11.1, 11.2 im Trennsteg 10 hindurchgeführt ist, sind die beiden Erdkabel 5, 6 an dem dazwischen angeordneten Trennsteg 10 fixierbar.

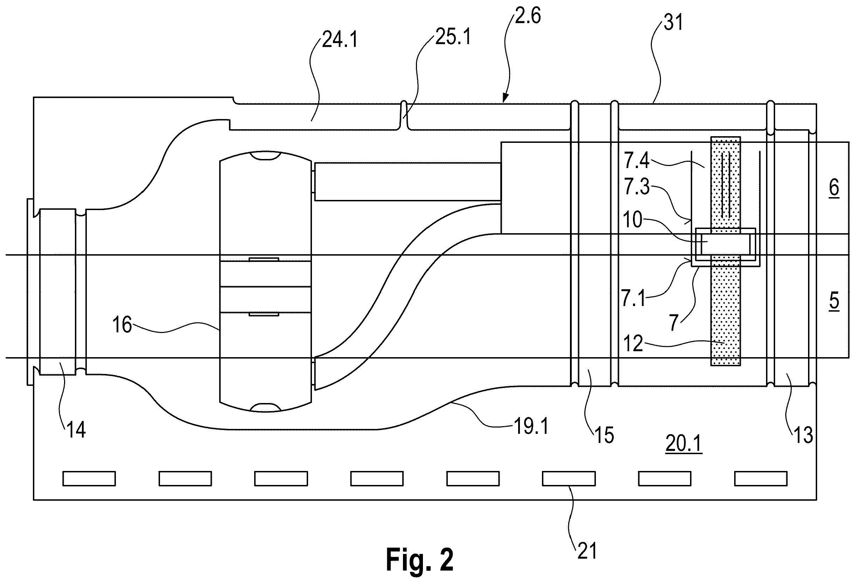

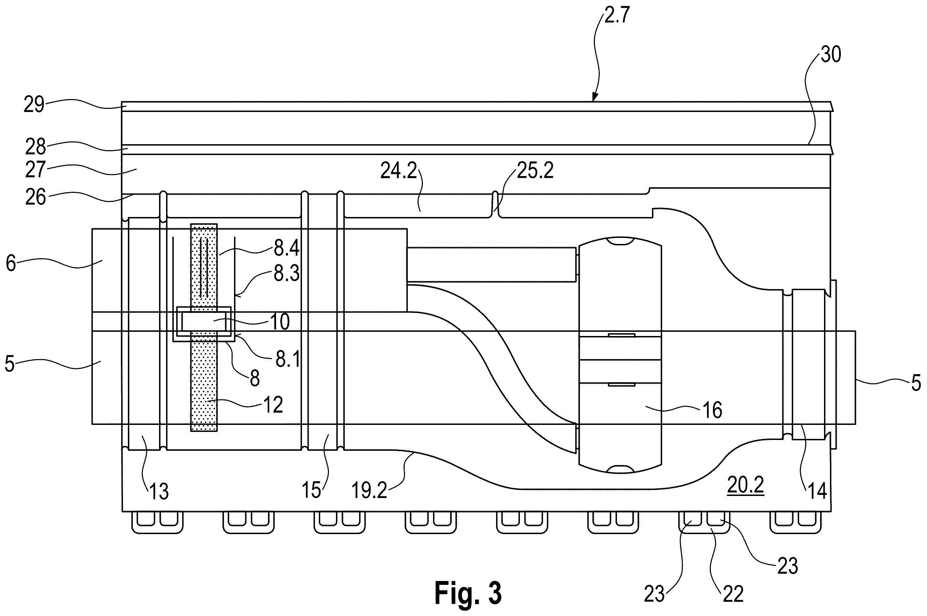

Beide Muffenhälse 2.2, 2.4 weisen angrenzend an die Durchgangsöffnung 3, 4 am Innenumfang einen umlaufenden Dichtsitz 13, 14 auf. Der Muffenhals 2.2 mit dem ovalen Querschnitt weist in einem Abstand davon einen weiteren Dichtsitz 15 auf. Die Ausbuchtungen 7, 8 sind zwischen den beiden Dichtsitzen 13, 15 des Muffenhalses 2.2 mit dem ovalen Querschnitt angeordnet, wobei die Ausbuchtungen 7, 8 angrenzend an den Dichtsitz 13 angeordnet sind, der sich neben der Durchgangsöffnung 3 befindet (vgl. Fig. 2, 3).

Der Querschnitt des Hauptabschnittes 2.1 ist so geformt und bemessen, dass ein Klemmring 16 zum Verbinden des Durchgangskabels 5 mit dem Abzweigkabel 6 darin Platz findet.

Das Muffengehäuse 2 hat an der Oberseite mehrere nebeneinander geordnete Einfüllschächte 17.1 bis 17.4 mit Einfüllöffnungen 18.1 bis 18.4 am oberen Rand. Die Einfüllschächte 17.1 bis 17.4 sind an der Oberseite des Hauptbereichs des Muffengehäuses 2.1, des Gehäusehalses 2.2 mit dem ovalen Querschnitt und des Übergangsbereiches 2.3 von diesem Gehäusehals zum Hauptbereich 2.1 angeordnet (Vgl. Fig. 1).

Die vertikale Trennebene 9 verläuft durch die endseitigen Durchgangsöffnungen 3, 4 und durch die Einfüllöffnungen 18.1 bis 18.4 hindurch.

Die beiden Gehäuseteile 2,6, 2.7 weisen am unteren Rand 19.1, 19.2 nach außen vorstehende Flansche 20.1, 20.2 auf. Das eine Gehäuseteil 2.6 weist in dem Flansch 20.1 rechteckige Stecköffnungen 21 auf. Das andere Gehäuseteil 2.7 weist vom Flansch nach unten 20.2 vorstehende Laschen 22 auf, an denen hakenförmige Steckzungen 23 ausgebildet sind (vgl. Fig. 2, 3).

Die beiden Gehäuseteile 2.6, 2.7 weisen am oberen Rand zur Teilungsebene 9 nach außen versetzt jeweils eine nach oben vorstehende seitliche Schachtwand 24.1, 24.2 der Einfüllschächte 17.1 bis 17.4 auf. Ferner weisen die beiden Gehäuseteile 2.6, 2.7 am oberen Rand jeweils Trennwandabschnitte 25.1, 25.2 auf, die sich von der seitlichen Schachtwand 24.1, 24.2 bis zur Teilungsebene 9 der beiden Gehäuseteile 19.1, 19.2 erstrecken. Die Trennwandabschnitte 25.1, 25.2 liegen in der Teilungsebene 9 aneinander an, wenn die Gehäuseteile 2.6, 2.7 zusammengesetzt sind. Insgesamt werden die Einfüllschächte 17.1 bis 17.4 somit durch die seitlichen Schachtwände 24.1, 24.2 und die Trennwandabschnitte 25.1, 25.2 begrenzt (vgl. Fig. 1-3).

Gemäß Fig. 3 ist das Gehäuseteil 2.7 am oberen Rand der seitlichen Schachtwand 24.2 über ein Filmscharnier 26 mit einer Verschlussklappe 27 verbunden. Diese erstreckt sich - unterteilt in mehrere Abschnitte - über die gesamte Länge des Muffengehäuses 2. Die Verschlussklappe 27 weist an der Unterseite in verschiedenen Abständen vom Filmscharnier 26 Schnapphaken 28, 29 auf, wobei ein Schnapphaken 28 etwa auf halber Länge der Verschlussklappe 27 und ein weiterer Schnapphaken 29 am Ende der Verschlussklappe 27 angeordnet ist. Auf der vom Filmscharnier 26 abgewandten Seite weist die Verschlussklappe 27 neben den erstgenannten Schnapphaken 28 ein weiteres Filmscharnier 30 auf.

Das andere Gehäuseteil 2.7 weist am oberen Rand der seitlichen Schachtwand 25.1 eine Verriegelungskante 31 auf, mit der die Schnapphaken 28, 29 der Verschlussklappe 27 verschnappbar sind.

Für die Montage der Abzweigmuffe 1 wird ein Hauptkabel 5 über einen Klemmring 16 mit einem Abzweigkabel 6 verbunden. Das Abzweigkabel 6 ist oberhalb des Hauptkabels 5 angeordnet.

Zwischen dem Durchgangskabel 5 und dem Abzweigkabel 6 wird ein Trennsteg 10 eingeschoben. Beim Zusammenklappen der beiden Gehäuseteile 2.6, 2.7 tauchen die Enden 10.1,10.2 des Trennstegs 10 in die Ausbuchtungen 7, 8 der beiden Gehäuseteile 2.6, 2.7 ein. Gegebenenfalls wird das Muffengehäuse 2 oder der Trennsteg 10 etwas in Längsrichtung des Muffengehäuses 2 verlagert, damit der Trennsteg 10 genau in die Ausbuchtungen 7, 8 eingefügt wird.

Ferner werden Dichtelemente 32, 33 z.B. aus Schaumstoff beidseits des Klemmrings 16 auf den Erdkabeln 5, 6 angebracht. Auf der Seite, auf der sich das Durchgangskabel 5 und das Abzweigkabel 6 vom Klemmring 16 weg erstrecken, wird ein Dichtelement 32 mit annährend ovalem Querschnitt angebracht. Auf der Seite, auf der sich nur das Durchgangskabel 5 vom Klemmring 16 weg erstreckt, wird ein annährend kreisrundes Dichtelement 33 angebracht. Schaumstoffformteile werden in der Regel eingeklebt.

Die beiden Gehäuseteile 2.6, 2.7 werden von verschiedenen Seiten an das Hauptkabel 5 und das Abzweigkabel 6 herangeführt, sodass der Klemmring 16 im Bereich des Hauptabschnittes 2.1 angeordnet ist. Die beiden Gehäuseteile 2.6, 2.7 werden zusammengefügt, wobei zunächst die hakenförmigen Steckzungen 23 des einen Gehäuseteiles 2.7 in die Stecköffnungen 21 des anderen Gehäuseteiles 2.6 eingesteckt werden. Danach werden die beiden Gehäuseteile 2.6, 2.7 um die Gelenkachse eines von den Steckzungen und den Stecköffnungen gebildeten ersten Gelenks 34 zusammengeschwenkt, bis die beiden Gehäuseteile 2.6, 2.7 aneinander anliegen. In dieser Position ist das Muffengehäuse 2 in Fig. 1 gezeigt.

Beim Zusammenschwenken der Gehäuseteile 2.6, 2.7 kommen die Dichtelemente 32, 33 in Anlage an den Dichtsitzen 13, 14 neben den Durchgangsöffnungen 3, 4.

Im zusammengeklappten Zustand können die beiden Gehäuseteile 2.6, 2.7 mittels der Verschlussklappe 27 oder einer von außen angreifenden Klemmvorrichtung gesichert werden. Vorzugsweise ist die Verschlussklappe 27 geteilt, sodass ein Teil der Verschlussklappe 27 zur Sicherung der beiden Gehäuseteile 2.6, 2.7 in der zusammengeschwenkten Stellung geschlossen werden kann und der andere Teil der Verschlussklappe 27 zunächst für das Einfüllen von Gießmasse in eine Einfüllöffnung 18.1 bis 18.4 geöffnet bleibt.

Schließlich wird die Gießmasse durch eine Einfüllöffnung 18.1 bis 18.4 in das Muffengehäuse 2 eingefüllt, bis sie in die Einfüllschächte 17.1 bis 17.4 aufsteigt. Die in das Muffengehäuse 2 eintretende Gießmasse verdrängt die Luft durch die Einfüllschächte 17.1 bis 17.4 nach außen. Aufgrund der Anschrägungen 7.4, 8.4 kann auch die Luft aus den Ausbuchtungen 7, 8 entweichen. Die Dichtelemente 32, 33 an den Enden verhindern, dass die Gießmasse an den Enden des Muffengehäuses 2 austritt.

Danach kann die Verschlussklappe 27 zugeklappt werden. Der nach außen vorstehende Abschnitt der Verschlussklappe 27 kann um das weitere Filmscharnier 30 gegen den ersten Abschnitt der Verschlussklappe 27 zurückgeklappt werden.

Nach dem Aushärten der Gießmasse umhüllt diese die stromführenden Teile der Verbindung zwischen dem Hauptkabel 5 und dem Abzweigkabel 6. Durch den Trennsteg 10 und die Fixierung der Erdkabel 5, 6 an diesem ist sichergestellt, dass überall eine Mindeststärke, der durch die ausgehärtete Gießmasse gebildeten Isolierschicht erreicht wird. Dadurch, dass das Muffengehäuse 2 über die Ausbuchtungen 7, 8 mit dem Trennsteg 10 verbunden ist, wird verhindert, dass durch das Gewicht der Gießmasse das Muffengehäuse 2 relativ zum Klemmring 16 absackt und die erforderlichen Stärken der Isolationsschicht nicht eingehalten werden.

Zudem wird durch die Verbindung der Erdkabel 5, 6 mit dem Trennsteg 10 und dem Muffengehäuse 2 verhindert, dass durch die Einwirkung einer Zugkraft auf das Abzweigkabel 6 die Gießmasse aufreißt und aufgrund eindringender Feuchtigkeit ein Kurzschluss auftritt oder der Klemmring 16 oder seine Verbindung mit den Leitern der Erdkabel 5, 6 beschädigt wird.

Da sich das Muffengehäuse 2 über den Trennsteg 10 an den Kabeln 5, 6 abstützt, können weiche Dichtelemente 32, 33 mit großer Wandstärke in die Dichtsitze 13, 14 eingesetzt werden, um den Abstand zwischen den Erdkabeln 5, 6 und den Dichtsitzen zu überbrücken. Dies ermöglicht es, die Kabelmuffe 1 für Verbindungen von Erdkabeln 5, 6 mit stark variierenden Querschnitten zu verwenden.

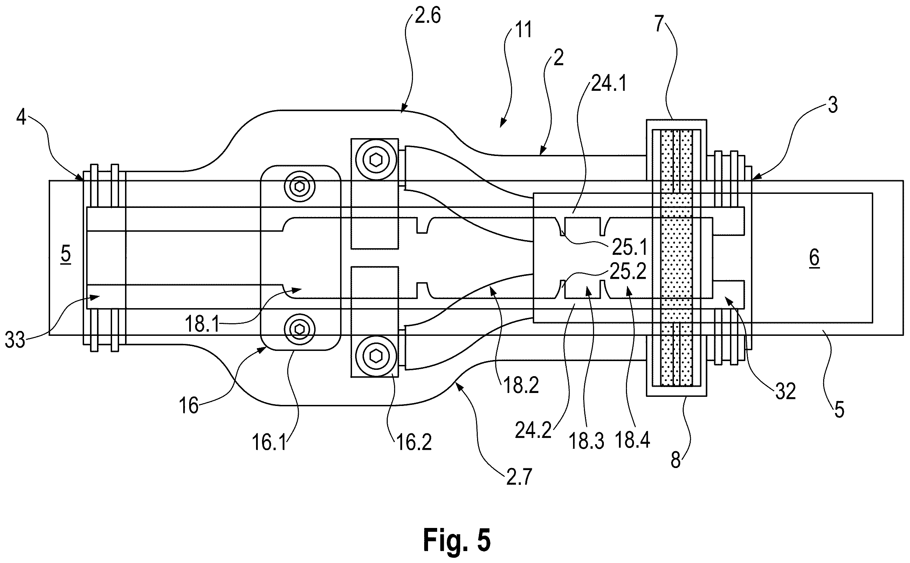

Die Abmessungen und die Bauart der Klemmringe 16 können in Abhängigkeit von den Querschnitten der miteinander zu verbindenden Erdkabel 5, 6 variieren. Bei größeren Kabelquerschnitten können Klemmringe 16 zum Einsatz kommen, die neben einem Abschnitt 16.1 zum Festklemmen am Hauptkabel 5 mehrere Abschnitte 16.2 ("Ohren") zum Verbinden mit den Leitern eines Abzweigkabels 6 aufweisen (vgl. Fig. 5). Um diese größeren Klemmringe 16 im Muffengehäuse 2 unterzubringen, sind die Gehäuseteile 2.6, 2.7 in eine Schwenkstellung zusammenschwenkbar, in der sie im oberen Bereich nicht aneinander anliegen. In dieser Schwenkstellung können die beiden Gehäuseteile 2.6, 2.7 durch Zuschwenken der Verschlussklappe 27 gesichert werden, wobei der am weitesten vom ersten Filmscharnier entfernten Schnapphaken 29 mit der Verriegelungskante 31 an den Einfüllöffnungen 18.1 bis 18.4 verriegelt wird.

Zum Abdichten des Muffengehäuses 2 an den Enden können gegebenenfalls die gleichen Dichtelemente 32, 33 wie bei der Anwendung gemäß Fig. 1 verwendet werden. Gegebenenfalls können hierfür Dichtelemente 32, 33 herangezogen werden, die an die Abmessungen der Durchgangsöffnungen 3, 4 in dem nur teilweise zusammengeschwenkten Zustand der beiden Gehäuseteile 2.6, 2.7 angepasst sind.

Spalte, die bei nur teilweise zusammengeschwenkten Gehäuseteilen 2.6, 2.7 zwischen deren Enden verbleiben, können gegebenenfalls durch weitere Dichtelemente geschlossen werden, bevor die Gießmasse eingefüllt wird.

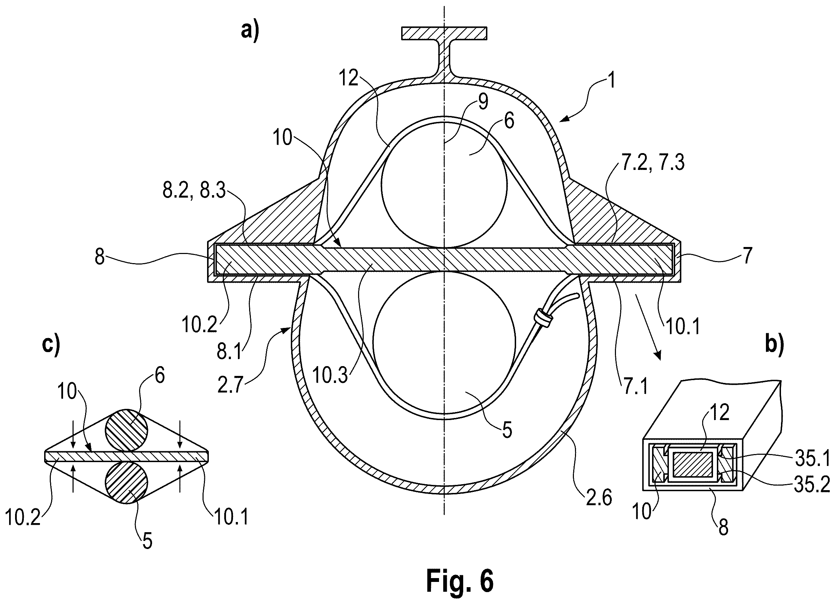

Fig. 6a zeigt eine alternative Fixierung der Erdkabel 5,6 am Trennsteg 10, bei der der Kabelbinder 12 schlaufenförmig um die beiden Erdkabel 5,6 und um die Enden 10.1,10.2 des Trennstegs 10 herumgelegt ist. Der Kabelbinder 12 wird von den Auflageflächen 7.1, 8.1 und den Anlageflächen 7.2, 7.3, 8.3 der Ausbuchtungen 7, 8 gegen die Enden des Trennsteges 10 gedrückt. Durch Zuziehen des Kabelbinders 12 werden die Erdkabel 5, 6 mit dem Trennsteg 10 verspannt.

Gemäß Fig. 6b weist der Trennsteg 10 auf der Oberseite und der Unterseite nutenförmige Führungen 35.1, 35.2 auf, die den um die Enden herumgelegten Kabelbinder 12 aufnehmen und an einem seitlichen Verrutschen hindern.

Gemäß Fig. 6c kann der vorgespannte Kabelbinder 12 durch Schließen der Gehäusehälften 2.6, 2.7 in Pfeilrichtung nachgespannt werden, bis er an den Enden 10.1,10.2 des Trennstegs 10 anliegt.

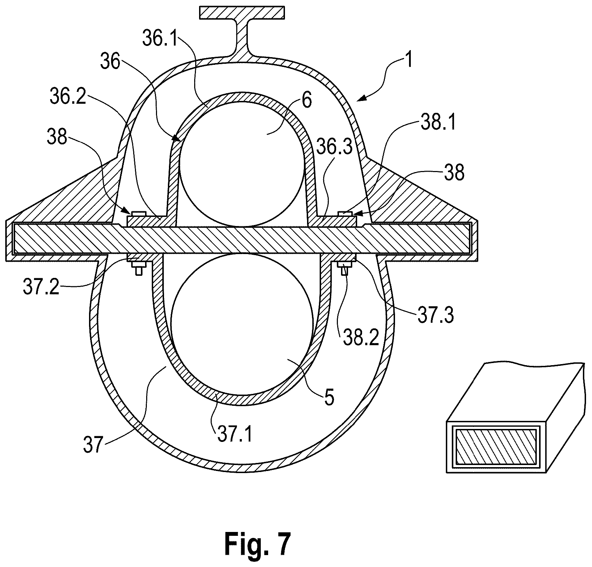

Gemäß Fig. 7 sind die Erdkabel 5, 6 mittels Kabelschellen 36, 37 an dem Trennsteg 10 fixiert. Die Kabelschellen 36, 37 weisen jeweils einen Bogenabschnitt 36.1, 37.1 und mit den Enden des Bogenabschnittes verbundene, seitlich vorstehende Schellenfüße 36.2, 36.3, 37.2, 37.3 auf. Die Abmessungen der Kabelschellen 36, 37 sind an die Querschnitte des Hauptkabels 5 und des Abzweigkabels 6 angepasst. Die Kabelschellen 36, 37 sind von verschiedenen Seiten um das Hauptkabel 5 und das Abzweigkabel 6 herumgelegt und jeweils an den Schellenfüßen 36.2, 36.3, 37.2, 37.3 mit verschiedenen Seiten des Trennsteges 10 verschraubt. Bei geeigneter Ausbildung der Kabelschellen 36, 37 kann die Verschraubung mittels zweier Schraubverbindungen 38 mit jeweils einer Schraube 38.1 und einer Mutter 38.2 erfolgen, die jeweils durch zwei Schellenfüße auf verschiedenen Seiten des Trennsteges 10 beidenends durchgeführt sind.

Für die Verbindung von Erdkabeln 5, 6 mit kleineren Querschnitten kann es ausreichen, wenn das Muffengehäuse 2 nur über einen geringeren Teil ihrer Länge mit Gießmasse gefüllt wird. Hierfür kann das Dichtelement 32, 33 in den Dichtsitz 15 eingesetzt werden, der nicht direkt an die Durchgangsöffnung 3 angrenzt, sondern weiter von dieser entfernt ist, wie in Fig. 2 gezeigt. In diesem Fall wird nur der zwischen den Erdkabeln 5, 6 und dem Klemmring 16 verbleibende Hohlraum zwischen den beiden Gehäuseteilen 19.1, 19.2 und den in die Dichtsitze 13, 15 eingesetzten Dichtelementen mit Gießmasse gefüllt. Bei dieser Anwendung der Kabelmuffe 1 ist die Zugentlastung außerhalb des mit Gießmasse gefüllten Bereiches angeordnet. Gleichwohl sind die Erdkabel 5, 6 über den Trennsteg 10 mit dem Muffengehäuse 1 und dem Kabelbinder 12 verbunden, sodass die vorteilhaften Wirkungen der Erfindung erzielt werden.

### Bezugszeichenliste:

- 1: Kabelmuffe
- 2: Muffengehäuse
- 2.1: Hauptabschnitt
- 2.2: Muffenhals
- 2.3: Übergangsbereich
- 2.4: Muffenhals
- 2.5: Übergangsbereich
- 2.6, 2.7: Gehäuseteil
- 3, 4: Durchgangsöffnung
- 5: Erdkabel (Hauptkabel)
- 6: Erdkabel (Abzweigkabel)
- 7, 8: Ausbuchtung
- 7.1, 8.1: Auflagefläche
- 7.2, 7.3, 8.2, 8.3: Anlagefläche
- 7.4, 8.4: Anschrägung
- 9: Trennebene
- 10: Trennsteg
- 10.1, 10.2: Ende des Trennstegs
- 10.3: mittlerer Abschnitt
- 11.1, 11.2: Loch
- 12: Kabelbinder
- 13, 14: Dichtsitz
- 15: weiterer Dichtsitz
- 16: Klemmring (in den Zeichnungen beispielhaft für die Kabelverbindungstechnik)
- 16.1,16.2: Abschnitt
- 17.1-17.4: Einfüllschacht
- 18.1-18.4: Einfüllöffnung
- 19.1, 19.2: unterer Rand
- 20.1, 20.2: Flansch
- 21: Stecköffnung
- 22: Lasche
- 23: Steckzunge
- 24.1, 24.2: seitliche Schachtwand
- 25.1, 25.2: Trennwandabschnitt
- 26: Filmscharnier (zweites Gelenk)
- 27: Verschlussklappe
- 28, 29: Schnapphaken
- 29: weiterer Schnapphaken
- 30: weiteres Filmscharnier
- 31: Verriegelungskante
- 32, 33: Dichtelement
- 34: erstes Gelenk
- 35.1, 35.2: Führung
- 36, 37: Kabelschelle
- 36.1, 37.1: Bogenabschnitt
- 36.2, 36.3, 37.2, 37.3: Schellenfuß
- 38: Schraubverbindung
- 38.1: Schraube
- 38.2: Mutter

### Erläuterungen zu den Zeichnungen:

- Figur 1:: von oben; Anwendung: schmal geschlossen + Kabel und Klemmring Zugentlastung: mit Lochplatte
- Figur 2:: Seitenansicht; Anwendung: schmal geschlossen + Kabel und Klemmring Zugentlastung: mit Lochplatte
- Figur 3:: Seitenansicht; Anwendung: schmal geschlossen + Kabel und Klemmring Zugentlastung mit Lochplatte
- Figur 4:: von vorne; Anwendung: schmal geschlossen + Kabel Zugentlastung: mit Lochplatte
- Figur 5:: von oben; Anwendung: breit geschlossen + Kabel und Klemmring Zugentlastung: mit Kabelspannplatte
- Figur 6b:: Seitenansicht
- Figur 6c:: Montageschnitt

## Patentansprüche

1. Kabelmuffe zum Umhüllen einer Verbindung zwischen mindestens zwei Erdkabeln, insbesondere einer seriellen Verbindung zweier Erdkabel oder einer Verbindung zwischen einem Hauptkabel und einem Abzweigkabel, umfassend
• ein Muffengehäuse,
• Durchgangsöffnungen für Erdkabel an beiden Enden des Muffengehäuses,
• nach außen gerichtete, hohle Ausbuchtungen in zwei einander gegenüberliegenden Seitenwänden des Muffengehäuses und
• mindestens eine Einfüllöffnung für eine aushärtbare Gießmasse an der Oberseite des Muffengehäuses,
• wobei das Muffengehäuse in Längsrichtung durch die beiden endseitigen Durchgangsöffnungen hindurch in zwei Gehäuseteile geteilt ist, sodass die beiden Gehäuseteile um ein durch die endseitigen Durchgangsöffnungen hindurch verlaufendes Erdkabel herum zusammenfügbar sind,
• einen Einlegesteg, der mit seinen beiden Enden in die Ausbuchtungen einsetzbar ist, um den Einlegesteg neben mindestens einem durch die beiden endseitigen Durchgangsöffnungen hindurch verlaufenden Erdkabel im Muffengehäuse zu halten, und
• mindestens eine Einrichtung zum Fixieren des mindestens einen Erdkabels am Einlegesteg.

2. Kabelmuffe nach Anspruch 1, bei der das Muffengehäuse in vertikaler Richtung geteilt ist.

3. Kabelmuffe nach Anspruch 2, bei der das Muffengehäuse durch die Einfüllöffnung hindurch geteilt ist.

4. Kabelmuffe nach einem der Ansprüche 1 bis 3, bei der die Einrichtung zum Fixieren des mindestens einen Erdkabels am Einlegesteg mindestens einen Kabelbinder umfasst, der ausgebildet ist, um schlaufenförmig um das mindestens eine Erdkabel herumgelegt zu werden und dieses mit dem Einlegesteg zu verspannen.

5. Kabelmuffe nach Anspruch 4, umfassend eines oder mehrere der folgenden Merkmale:
• der Kabelbinder ist auf beiden Seiten des mindestens einen Erdkabels durch Löcher des Einlegestegs hindurchgeführt,
• der Kabelbinder ist ausgebildet, um schlaufenförmig um das mindestens eine Erdkabel und die äußeren Enden des Einlegestegs herumgelegt zu werden,
• der Einlegesteg weist auf mindestens einer Seite Einrichtungen zum Führen des Kabelbinders auf.

6. Kabelmuffe nach Anspruch 5, bei der die beiden Gehäuseteile ausgebildet sind, einen um die Enden des Einlegesteges herumgelegten Kabelbinder beim Zusammenfügen der Gehäusehälften gegen die Außenseiten der beiden Enden des Einlegesteges zu pressen.

7. Kabelmuffe nach einem der Ansprüche 1 bis 6, bei der die Einrichtung zum Fixieren des mindestens einen Erdkabels am Einlegesteg mindestens eine Kabelschelle aufweist, die an Schellenfüßen auf einer Seite des Einlegestegs fixierbar sind, um mindestens ein Erdkabel aufzunehmen und auf einer Seite des Einlegestegs zu fixieren.

8. Kabelmuffe nach einem der Ansprüche 1 bis 7, bei der der Trennsteg an den beiden Enden und die Ausbuchtungen an den Auflageflächen für den Trennsteg zusammenfügbare Profilierungen und/oder miteinander verschnappbare Schnappelemente aufweist, um den Trennsteg bei der Montage in den Ausbuchtungen festzulegen.

9. Kabelmuffe nach einem der Ansprüche 1 bis 8, bei der die Ausbuchtungen an der Oberseite jeweils mindestens eine Anlagefläche für die Enden des Trennstegs und neben der Anlagefläche eine nach innen geneigte Anschrägung zum Ableiten von Lufteinschlüssen beim Einfüllen von Gießmasse zur Einfüllöffnung hin aufweisen.

10. Kabelmuffe nach einem der Ansprüche 1 bis 9, bei der die Ausbuchtungen zum Einsetzen des Trennsteges angrenzend an eine Durchgangsöffnung oder an einen an die Durchgangsöffnung angrenzenden Dichtsitz angeordnet sind.

11. Kabelmuffe nach einem der Ansprüche 1 bis 10, bei der die beiden Gehäuseteile um ein erstes Gelenk auf einer Seite des Muffengehäuses mit einer in Längsrichtung des Muffengehäuses verlaufenden Gelenkachse zusammenschwenkbar miteinander verbunden sind.

12. Kabelmuffe nach Anspruch 11, bei der das erste Gelenk Steckzungen und Stecköffnungen aufweist, die an benachbarten Rändern der beiden Gehäuseteile angeordnet sind, wobei die Steckzungen und Stecköffnungen ausgebildet sind, zusammengesteckt zu werden und die beiden Gehäuseteile um die eine erste Gelenkachse schwenkbar miteinander zu verbinden.

13. Kabelmuffe nach Anspruch 11 oder 12, bei der das Muffengehäuse um ein erstes Gelenk an der Unterseite zusammenklappbare Gehäuseteile aufweist, zwischen denen die Einfüllöffnung ausgebildet ist, und das Muffengehäuse an der Einfüllöffnung mindestens eine Verschlussklappe aufweist, die über ein zweites Gelenk mit einer in Längsrichtung des Muffengehäuses verlaufenden Gelenkachse mit einem Gehäuseteil verbunden ist und die in einem Abstand vom zweiten Gelenk mindestens einen Schnapphaken aufweist, der mit einer Verriegelungskante an dem anderen Gehäuseteil verriegelbar ist, wenn die beiden Gehäuseteile zusammengeschwenkt sind.

14. Kabelmuffe nach Anspruch 13, bei der die Verschlussklappe Schnapphaken aufweist, die verschiedene Abstände von dem zweiten Gelenk aufweisen, wobei ein näher an dem zweiten Gelenk angeordneter erster Schnapphaken mit einer Verriegelungskante an dem anderen Gehäuseteil auf der gegenüberliegenden Seite der Einfüllöffnung verschnappbar ist, wenn die beiden Gehäusehälften zusammengeschwenkt sind, und ein weiter von dem zweiten Gelenk entfernter zweiter Schnapphaken mit der Verriegelungskante verschnappbar ist, wenn sich die beiden Gehäuseteile in einer nur teilweise zusammengeklappten Schwenkstellung befinden.

15. Kabelmuffe nach einem der Ansprüche 1 bis 14, umfassend eines oder mehrere der folgenden Merkmale:
• das Muffengehäuse weist an der Oberseite mindestens einen Einfüllstutzen mit der Einfüllöffnung am oberen Rand auf,
• das Muffengehäuse weist angrenzend an die Durchgangsöffnungen jeweils einen Dichtsitz für ein Dichtelement zum Abdichten auf mindestens einem durch die Durchgangsöffnung hindurchgeführten Erdkabel auf,
• das Muffengehäuse weist auf mindestens einer Seite in verschiedenen Abständen von der endseitigen Durchgangsöffnung verschiedene Dichtsitze für ein Dichtelement zum Abdichten auf mindestens einem durch die Durchgangsöffnung hindurchgeführten Erdkabel auf, um wahlweise das Erdkabel in verschiedenen Abständen von der Durchgangsöffnung abzudichten.

16. Kabelmuffe nach einem der Ansprüche 1 bis 15, die einen Klemmring umfasst, der Klemmeinrichtungen, Einrichtungen zum Verspannen der Klemmeinrichtungen mit zwei Erdkabeln, Kontaktelemente, Einrichtung zum Verspannen der Kontaktelemente mit den Leitern zweier Erdkabel und elektrische Verbindungseinrichtungen zwischen einander zugeordneten Kontaktelementen für die verschiedenen Erdkabel aufweist und ausgebildet ist, in dem Muffengehäuse um beide Erdkabel herumgelegt zu werden und die miteinander zu verbindenden Leiter der beiden Erdkabel miteinander zu verbinden.
